# EUROPÄISCHE PATENTSCHRIFT

(11) **EP 3 434 510 B1**
(45) Veröffentlichungstag und Bekanntmachung des Hinweises auf die Patenterteilung: **01.09.2021**
(21) Anmeldenummer: 18181912.9
(22) Anmeldetag: 05.07.2018
(51) Int. Cl.: B61D 33/00, B60N 2/005, B60N 2/14, B60N 2/06, B60N 2/24

(54) **VARIABLES INTERIEUR EINES FAHRGASTRAUMS**
VARIABLE INTERIOR OF A PASSENGER COMPARTMENT
INTÉRIEUR VARIABLE D'UN HABITACLE

(30) Priorität: 27.07.2017 DE 102017117046
(43) Veröffentlichungstag der Anmeldung: 30.01.2019
(73) Patentinhaber: MAN Truck & Bus SE, 80995 München (DE)
(72) Erfinder: Loinger, Benjamin, 6105 Leutasch (AT); Gaedtke, Sven, 85221 Dachau (DE); Landsherr, Thomas, 80995 München (DE); Elbs, Norbert, verstorben (DE); Schönherr, Stephan, 86153 Augsburg (DE)
(74) Vertreter: v. Bezold & Partner Patentanwälte - PartG mbB

(56) Entgegenhaltungen:
- EP-A1- 2 620 366
- WO-A1-2016/199919
- GB-A- 2 531 167
- US-A1- 2011 140 499

## Beschreibung

Die vorliegende Erfindung betrifft ein Personenbeförderungsfahrzeug mit einem variabel anordenbarem Interieur in einem Fahrgastraum. Insbesondere betrifft die Erfindung eine variabel anordenbare Sitzgruppe in einem Fahrgastraum eines Personenbeförderungsfahrzeugs.

Sitze auf einem drehbaren Träger für Kraftfahrzeuge, Busse oder Wohnanhänger sind im Stand der Technik bekannt. Das Dokument DE 43 09 894 A1 beschreibt eine drehbare und ausrichtbare Platte, die auf dem Fußboden eines Verkehrsmittels befestigt ist. Die Platte ist über Kugellager drehbar gelagert und trägt einen Sitz.

Jedoch dient eine solche Drehbarkeit lediglich dem Nutzungskomfort und ermöglicht nicht eine variable Sitzplatzkonfiguration in einem Fahrgastraum.

Im Zusammenhang mit einem variablen Einstellen einer Sitzplatzanordnung in einem Personennahverkehrsfahrzeug beschreibt das Dokument GB 2531167 A eine Sitzunterbaugruppe, die drehbar auf einem Träger montiert ist, um dadurch einen Wechsel der Sitzausrichtung zwischen einer Ausrichtung entlang der Fahrtrichtung und einer Ausrichtung nach innen zu ermöglichen. Nachteilig an dieser Lösung ist allerdings, dass der Träger an einer Seitenwand des Fahrzeugs befestigt ist und dadurch beispielsweise eine Sitzausrichtung nach außen nicht möglich ist und zudem aufgrund der aus dieser Halterung resultierenden Drehmomente hohe Belastungen auf die Lagerung und die Seitenwand wirken.

In der Luftfahrt besteht die Notwendigkeit, die Sitze in einer Passagierkabine unterschiedlich dicht anzuordnen. Das Dokument DE 692 15 458 T2 beschreibt eine Sitzflächenanordnung für ein Flugzeug, in dem Sitze einer Sitzreihe wahlweise zusammengeschoben werden können. Jedoch ist an den herkömmlichen Sitzanordnungen nachteilig, dass grundlegende Änderungen, beispielsweise der Reihenaufteilung oder Sitzgruppierung, nur durch den vollständigen Ausbau und Wiedereinbau mehrerer Sitze möglich sind. Dabei muss für jeden Sitz eine Vielzahl an Schraubverbindungen gelöst und am neuen Bestimmungsort des Sitzes angebracht werden.

Somit besteht die Aufgabe der vorliegenden Erfindung darin, eine Technik zur variablen Anordnung von Sitzen in einem Fahrgastraum anzugeben. Eine weitere oder alternative Aufgabe besteht darin, eine Sitzkonfiguration in einem Fahrgastraum großflächig zu verändern, ohne die Sitze auszubauen.

Diese Aufgabe oder Aufgaben werden durch eine Technik mit Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Sitzgruppe zur variablen Anordnung in einem Fahrgastraum eines Personenbeförderungsfahrzeugs bereitgestellt. Die Sitzgruppe umfasst mindestens zwei Sitzplätze und einen die mindestens zwei Sitzplätze tragenden Unterbau. Der Unterbau umfasst bodenseitig eine Verankerungsstelle. Die Verankerungsstelle ist in einem gelösten Zustand in eine Nutenführung einsetzbar. In einem arretierten Zustand ist die Verankerungsstelle in der Nutenführung lösbar arretiert. Die Sitzgruppe ist im gelösten Zustand bezüglich der Nutenführung verschiebbar und drehbar. Im arretierten Zustand ist die Sitzgruppe bezüglich der Nutenführung orts- und drehfest.

Ausführungsbeispiele der Sitzgruppen können ohne Ausbau variable im Fahrgastraum angeordnet werden. Ausführungsbeispiele der Sitzgruppen können eine Veränderung der Anordnung der Sitzgruppen ohne Losteile ermöglichen. Beispielsweise kann die jeweilige Verankerungsstelle beim Verändern der Anordnung einzelner oder mehrerer solcher Sitzgruppen innerhalb des Fahrgastraums immer in der Nutenführung eingehängt bleiben. Die Verankerungsstelle und/oder die Sitzgruppe können im gelösten Zustand längs der Nutenführung verschiebbar sein. Die Verankerungsstelle und/oder die Sitzgruppe können im gelösten Zustand an jeder Längsposition der Nutenführung drehbar sein.

Die Sitzgruppe kann beispielsweise um 90°, 180° oder 270° drehbar sein. Unabhängig von der orts- und drehfesten Anordnung der Sitzgruppe hinsichtlich des Unterbaus im arretierten Zustand können einzelne oder alle Sitzplätze einer Sitzgruppe in herkömmlicher weise drehbar und/oder kippbar bezüglich des Unterbaus sein.

Der Begriff "bodenseitig" kann die von den Sitzplätzen abgewandte Seite des Unterbaus betreffen. Die Nutenführung kann am Boden des Fahrgastraums angeordnet sein.

Im gelösten Zustand kann die Verankerungsstelle in einer Längsrichtung der Nutenführung beweglich angeordnet oder anordenbar sein. In einer Ebene senkrecht zur Längsrichtung der Nutenführung kann die Verankerungsstelle im gelösten Zustand formschlüssig in der Nutenführung angeordnet oder anordenbar sein. Die Nutenführung kann Schienen und/oder in Längsrichtung translationssymmetrische Profile umfassen.

Die Verankerungsstelle kann einen zur Verbindung mit der Nutenführung ausgebildeten Nutenstein umfassen. Der Nutenstein kann mit der Nutenführung in Eingriff stehen oder in Eingriff bringbar sein. Der Nutenstein kann ein Schwalbenschwanz für eine Schwalbenschwanzverbindung in der Nutenführung sein. Alternativ kann der Nutzenstein ein T-Nutenstein sein.

Die Drehbarkeit der Sitzgruppe im gelösten Zustand kann durch einen in der Nutenführung drehbaren Nutenstein (beispielsweise einen drehsymmetrischen Nutenstein) und/oder eine drehbare Lagerung des Nutensteins an der Verankerungsstelle realisiert sein.

Die Verankerungsstelle kann zentral, beispielsweise mittig, unterhalb der Sitzplätze angeordnet sein. Jede Verankerungsstelle und/oder jede Sitzgruppe kann jeweils genau einen Nutenstein umfassen. Der Nutenstein kann auf einer Drehachse der Drehbeweglichkeit der Verankerungsstelle im gelösten Zustand angeordnet sein.

Die mindestens zwei Sitzplätze der Sitzgruppe können aneinander angrenzend und/oder parallel zueinander ausgerichtet sein. Die Sitzplätze derselben Sitzgruppe können zueinander unbeweglich sein.

Die Sitzgruppe kann eine oder mehrere Lüftungsöffnungen zum Ausstoßen oder Erzeugen eines Luftstroms aufweisen. Die Lüftungsöffnungen können in die Sitzgruppe, vorzugsweise in jedem der Sitzplätze, integriert sein. Jede Lüftungsöffnung kann hinsichtlich ihrer Position in der Sitzgruppe und/oder Richtung des Luftstroms jeweils einem der mindestens zwei Sitzplätze räumlich zugeordnet sein.

Die Sitzgruppe kann eine oder mehrere Gepäckablagen umfassen. Die Gepäckablage kann in die Sitzgruppe, vorzugsweise in jedem der Sitzplätze, integriert sein. Die Gepäckablage kann ein Ablagefach und/oder ein elastisches Netz umfassen.

Der Unterbau kann ferner Füße umfassen. Die Füße und die Verankerungsstelle des Unterbaus können im Wesentlichen in einer Ebene angeordnet sein. Die Verankerungsstelle kann im arretierten Zustand mit einer Zugkraft vorgespannt sein. Die Verankerungsstelle kann im arretierten Zustand mit der Nutenführung über die Zugkraft in vertikaler Richtung vorgespannt verbunden sein. Die Zugkraft kann die Füße des Unterbaus reibschlüssig auf einen Boden des Fahrgastraums drücken, auf oder in dem die Nutenführung befestigt ist. Durch den Reibschluss kann die Drehfestigkeit der Sitzgruppe im arretierten Zustand realisiert sein.

Die Verankerungsstelle kann von den Füßen umgeben sein. Die Verankerungsstelle kann zwischen allen Füßen des Unterbaus, beispielsweise an einem geometrischen Schwerpunkt oder einer geometrischen Mitte aller Füße, angeordnet sein.

Die Erfindung betrifft ein Personenbeförderungsfahrzeug, insbesondere einen Bus, mit einem Fahrgastraum. Der Fahrgastraum umfasst mindestens eine am Boden des Fahrgastraums befestigte Nutenführung und mehrere Sitzgruppen gemäß dem vorgenannten Aspekt.

Die Sitzgruppen sind in einer ersten Anordnung durch den arretierten Zustand der Verankerungsstellen orts- und drehfest auf dem Boden des Fahrgastraums angeordnet. Die Sitzgruppen im gelösten Zustand der Verankerungsstellen sind in eine zweite Anordnung längs der Nutenführung verschiebbar und/oder drehbar. Mittels des arretierten Zustands sind in der zweiten Anordnung die Sitzgruppen orts- und drehfest auf dem Boden des Fahrgastraums anordenbar.

Das Personenbeförderungsfahrzeug kann ein Landfahrzeug (insbesondere ein Kraftfahrzeug oder ein Schienenfahrzeug), ein Luftfahrzeug und/oder ein Wasserfahrzeug sein. Insbesondere kann das Personenbeförderungsfahrzeug ein Personenkraftwagen, ein Zug, ein Reisezugwagen, eine Straßenbahn, ein Straßenbahnwagen, ein Schiff (insbesondere eine Personenfähre), ein Flugzeug oder ein Bus (insbesondere ein Oberleitungsbus) sein. Der Fahrgastraum kann ein Fahrgastraum eines Busses oder einer Straßenbahn, eine Fahrgastzelle eines Personenkraftwagens, ein Passagierdeck eines Schiffs oder eine Passagierkabine eines Flugzeugs sein.

Die Verankerungsstellen können beim Übergang von der ersten Anordnung in die zweite Anordnung mit der Nutenführung in Eingriff bleiben. Der bei einem Einbau der Sitzgruppen bewerkstelligte Eingriff kann bei der Veränderung der Anordnung bestehen bleiben.

Die Nutenführung kann mindestens eine Längsführung (beispielsweis in Längsrichtung des Personenbeförderungsfahrzeugs) umfassen. Alternativ oder ergänzend kann die Längsführung eine oder mehrere Querführungen umfassen, die sich beispielsweis senkrecht zur Längsrichtung des Personenbeförderungsfahrzeugs erstrecken. Die Längsführungen und Querführungen kann an Verzweigungspunkten oder Kreuzungspunkten durchgehend sein.

Die Verankerungsstelle kann im gelösten Zustand entlang der durchgehend verbunden Nutenführung großflächig beweglich sein. Die mehreren Querführungen können (beispielsweise beidseitig) quer von der Längsführung abzweigen oder verzweigen. Die Sitzgruppe kann im gelösten Zustand entlang der Querführung und durchgehend zur Längsführung verfahrbar sein.

Jede der Sitzgruppen kann einer der Querführungen (beispielsweise räumlich) zugeordnet sein. Bei der ersten Anordnung kann die Verankerungsstelle jeder Sitzgruppe in der zugeordneten Querführung arretiert sein. Bei der zweiten Anordnung kann die Verankerungsstelle jeder Sitzgruppe in der Längsführung arretiert sein.

Die Nutenführung kann an mindestens einem ihrer Enden jeweils eine Einführöffnung aufweisen. Die Einführöffnung kann zur Einführung des Nutensteins im gelösten Zustand ausgebildet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische perspektivische Darstellung eines Ausführungsbeispiels einer Sitzgruppe zur variablen Anordnung in einem Fahrgastraum;
- Figur 2: eine schematische perspektivische Darstellung einer ersten Implementierung eines Unterbaus, die in jedem Ausführungsbeispiel einsetzbar ist;
- Figur 3: eine schematische perspektivische Darstellung einer zweiten Implementierung des Unterbaus, die in jedem Ausführungsbeispiel einsetzbar ist;
- Figur 4: einen schematischen Grundriss eines Ausführungsbeispiels eines Fahrgastraums, in dem jedes Ausführungsbeispiel der Sitzgruppe einsetzbar ist;
- Figur 5: eine schematische perspektivische Darstellung einer ersten Anordnung von Sitzgruppen in einem beispielhaften Fahrgastraum;
- Figur 6: eine schematische perspektivische Darstellung einer zweiten Anordnung von Sitzgruppen in einem beispielhaften Fahrgastraum;
- Figur 7: eine schematische perspektivische Darstellung einer dritten Anordnung von Sitzgruppen in einem beispielhaften Fahrgastraum; und
- Figur 8: eine schematische Darstellung der dritten Anordnung in einer zweiten Perspektive.

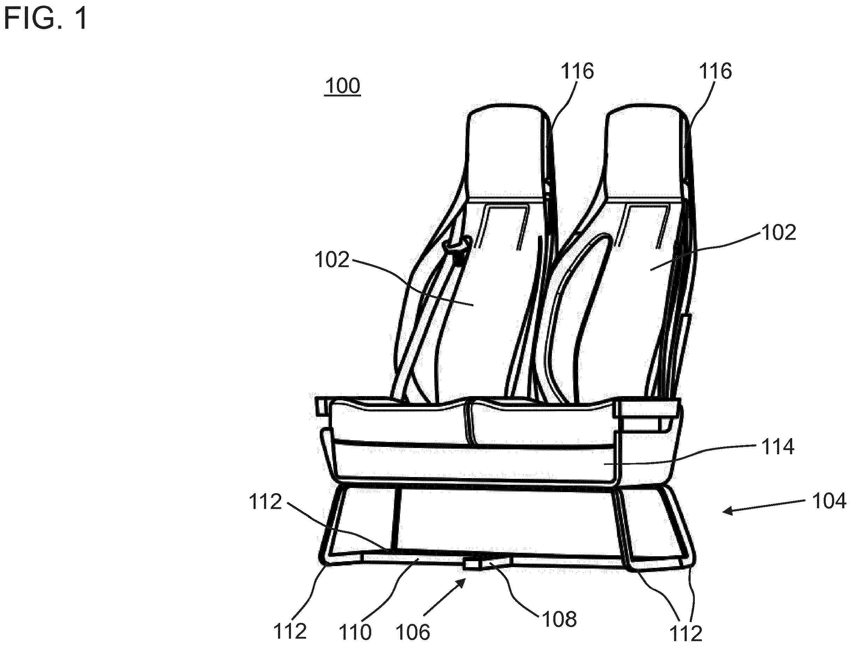

Figur 1 zeigt schematisch eine perspektivische Darstellung einer beispielhaften und allgemein mit Bezugszeichen 100 bezeichneten Sitzgruppe zur variablen Anordnung in einem Fahrgastraum eines Personenbeförderungsfahrzeugs. Das Personenbeförderungsfahrzeug kann ein Landfahrzeug, ein Wasserfahrzeug, ein Luftfahrzeug oder ein Raumfahrzeug sein.

Die Sitzgruppe 100 umfasst mindestens zwei Sitzplätze 102 und einen Unterbau 104, der die mindestens zwei Sitzplätze gemeinsam trägt. Der Unterbau 104 kann hinsichtlich Breite und Tiefe (d.h. in seinen horizontalen Abmessungen) mit den Abmessungen der gesamten Sitzfläche (und gegebenenfalls von Armlehnen) übereinstimmen.

Der Unterbau 104 umfasst bodenseitig eine Verankerungsstelle 106, die in einem gelösten Zustand in eine Nutenführung einsetzbar ist, und die in einem arretierten Zustand in der Nutenführung lösbar arretiert ist. Die Sitzgruppe 100 ist im gelösten Zustand bezüglich der Nutenführung, d.h. bezüglich dem Fahrgastraum, verschiebbar und drehbar. Im arretierten Zustand der Verankerungsstelle 106 ist die Sitzgruppe 100 bezüglich der Nutenführung, d.h. bezüglich dem Fahrgastraum, orts- und drehfest.

Die Verankerungsstelle 106 kann, wie beispielsweise im Ausführungsbeispiel der Figur 1 gezeigt, über einen bodenseitigen oder bodennahen Querträger 108 und einen bodenseitigen oder bodennahen Längsträger 110 mit Füßen 112 des Unterbaus 104 mechanisch verbunden sein. Die Verankerungsstelle 106 ist zentral, beispielsweise mittig bezüglich der gesamten Sitzfläche der mindestens zwei Sitzplätze 102, an der Bodenseite des Unterbaus angeordnet. Vorzugsweise umfasst der Unterbau 104 einer Sitzgruppe 100 nur eine Verankerungsstelle 106.

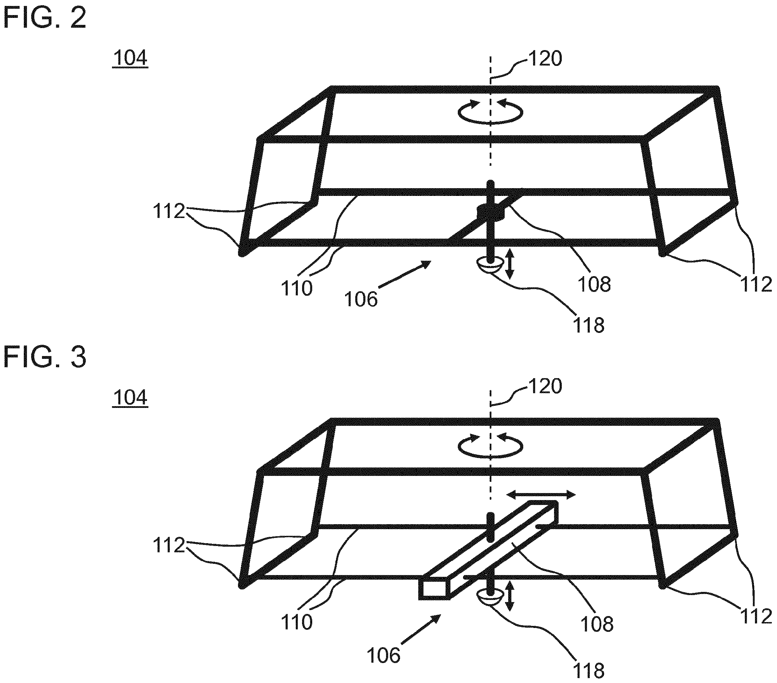

Figur 2 zeigt schematisch eine perspektivische Darstellung einer ersten Implementierung des Unterbaus 104. Die Implementierung ist in jedem Ausführungsbeispiel der Sitzgruppe 100 einsetzbar. Merkmale des Unterbaus 104, die mit jenen des ersten Ausführungsbeispiels der Sitzgruppe 100 übereinstimmen, sind mit entsprechenden Bezugszeichen versehen.

Durch die zentrale Verankerungsstelle 106 können mehrere solche Sitzgruppen entlang der Nutenführung verschoben und gedreht werden, um eine flexible Gestaltung des Innenraums des Personenbeförderungsfahrzeugs zu ermöglichen. Die Sitzgruppen 100 drehen sich um ihren eigenen zentralen Drehpunkt, der durch die Verankerungsstelle 106 definiert ist. Die Sitzgruppen 100 werden mithilfe von einem mechanischen Sicherungssystem am Verankerungspunkt 106 im arretierten Zustand der Verankerungsstelle 106 am Boden des Fahrgastraums befestigt. Die Arretierung ist bei Bedarf lösbar, d.h. in den gelösten Zustand zurückführbar, um die Sitzgruppen neu anzuordnen.

Die Sitzgruppen 100 können zu einem Sitzsystem kombiniert werden, das aufgrund der Verankerungsstellen 106 sowohl verschiedene Sitzabstände als auch unterschiedliche Sitzanordnungen ermöglicht. Um die variable Anordnung ohne funktionale Einschränkungen zu gewährleisten, können bestimmte Funktionen in die Sitzgruppe 100 integriert sein. Beispielsweise kann jede Sitzgruppe 100, vorzugsweise jeder einzelne Sitzplatz 102 der Sitzgruppe 100, ein Gepäckablagefach 114 und Lüftungsöffnungen 116 aufweisen. Im in Figur 1 gezeigten ersten Ausführungsbeispiel der Sitzgruppe 100 ist eine durchgehende Gepäckablage 114 unter den Sitzplätzen 102 einer Sitzgruppe 100 angeordnet. Die Lüftungsöffnungen 116 sind auf beiden Seiten einer Nackenstütze jedes Sitzplatzes 102 angeordnet.

In der in Figur 2 gezeigten ersten Implementierung des Unterbaus 104 ist ein Nutenstein 118 bodenseitig an der Verankerungsstelle 106 angeordnet, beispielsweise am Querträger 108, der über die Längsträger 110 mit den Füßen 112 des Unterbaus verbunden ist. Im gelösten Zustand der Verankerungsstelle 106 steht der Nutenstein 118 bodenseitig an dem Unterbau 104 hervor und/oder ist vertikal beweglich, um in eine Nutenführung eingesetzt zu werden. Im arretierten Zustand der Verankerungsstelle 106 ist der Nutenstein 118 in vertikaler Richtung mit einer Zugkraft vorgespannt. Die Zugkraft kann eine reibschlüssige Verbindung des Nutensteins 118 in der Nutenführung bewirken und/oder die Füße 112 des Unterbaus 104 gegen einen Boden des Fahrgastraums drücken, so dass der Unterbau 104 auf dem Boden orts- und drehfest angeordnet ist.

Im gelösten Zustand der Verankerungsstelle 106 kann der Unterbau 104 (und damit die gesamte Sitzgruppe 100) längs der Nutenführung verschiebbar und um eine durch den Nutenstein 118 definierte Drehachse 120 an jeder Stelle der Nutenführung drehbar sein. Die Drehbeweglichkeit der Verankerungsstelle 106 im gelösten Zustand kann durch einen (wie in der ersten Implementierung in Figur 2 gezeigt) drehsymmetrischen Nutenstein 118 realisiert sein. Alternativ oder zusätzlich kann der Nutenstein 118 drehbeweglich am Querträger 108 befestigt sein.

Die Zugspannung im arretierten Zustand der Verankerungsstelle 106 kann durch einen Spannverschluss mit einem Exzenter an der Verankerungsstelle 106 zwischen Nutenstein 118 und Querträger 108 realisiert sein. Alternativ oder ergänzend kann die Zugspannung durch anziehen einer Schraubverbindung zwischen Nutenstein 118 und Querträger 108 realisiert sein.

Figur 3 zeigt eine zweite Implementierung des Unterbaus 104. Die zweite Implementierung ist in jedem Ausführungsbeispiel der Sitzgruppe 100 einsetzbar und/oder als Weiterbildung der ersten Implementierung realisierbar. Einzelne Merkmale, die mit denen der ersten Implementierung übereinstimmen oder austauschbar sind, sind mit entsprechenden Bezugszeichen versehen.

Der Querträger 108 ist in der zweiten Implementierung entlang der Längsträger 110 verschiebbar im gelösten Zustand der Verankerungsstelle 106. Dadurch kann ein zusätzlicher Freiheitsgrad in der Positionierung der Sitzgruppe erreicht werden, beispielsweise ohne zusätzliche oder längere Nutenführungen am Boden des Fahrgastraums.

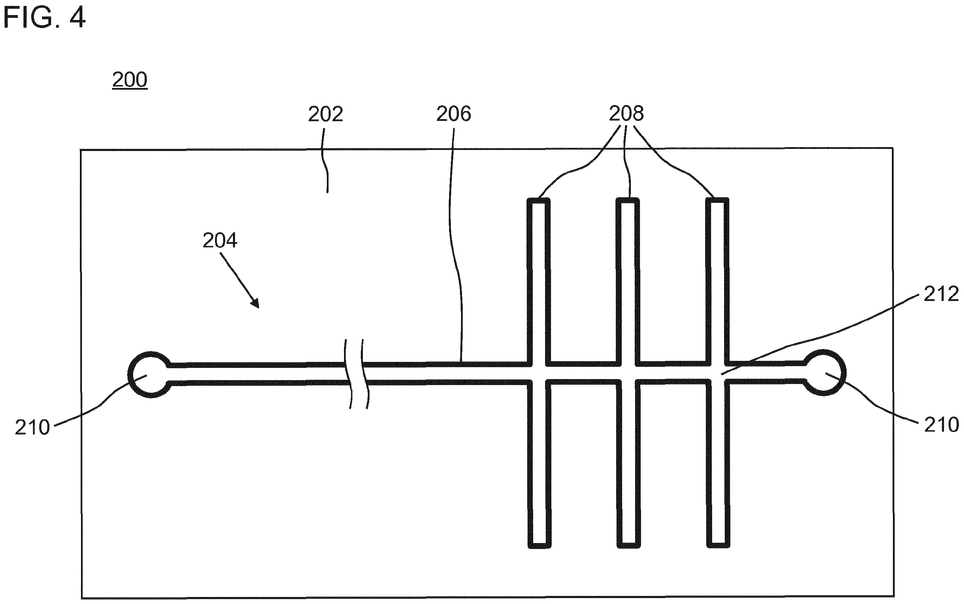

Figur 4 zeigt schematisch einen Grundriss eines Bodens 202 in einem Ausführungsbeispiel des Fahrgastraums 200. In den Boden 202 ist die Nutenführung 204 bündig eingelassen. Die Nutenführung 204 umfasst eine Längsführung 206 und sich unterbrechungsfrei von der Längsführung erstreckende Querführungen 208. Im in Figur 4 gezeigten Ausführungsbeispiel erstrecken sich die Querführungen 208 senkrecht zur Längsführung 206 und sind voneinander gleich beabstandet. Beispielsweise entspricht der Abstand zwischen benachbarten Querführungen 208 einem Mindestabstand zwischen den Sitzgruppen 100.

An den beiden Enden der Längsführung 206 sind Einführungsöffnungen 210 vorgesehen. Beispielsweise umfasst ein Profil des Nutenstein 118 ein erstes Quermaß und ein (vom Unterbau 104 weiter beabstandetes) zweites Quermaß, das größer als das erste Quermaß ist. Eine Öffnungsweite der Einführöffnungen 210 kann größer als das zweite Quermaß (oder gleich dem zweiten Quermaß) sein. Eine Öffnungsweite der Nutenführung 204 kann kleiner als das zweite Quermaß und größer als das erste Quermaß (oder gleich dem ersten Quermaß) sein.

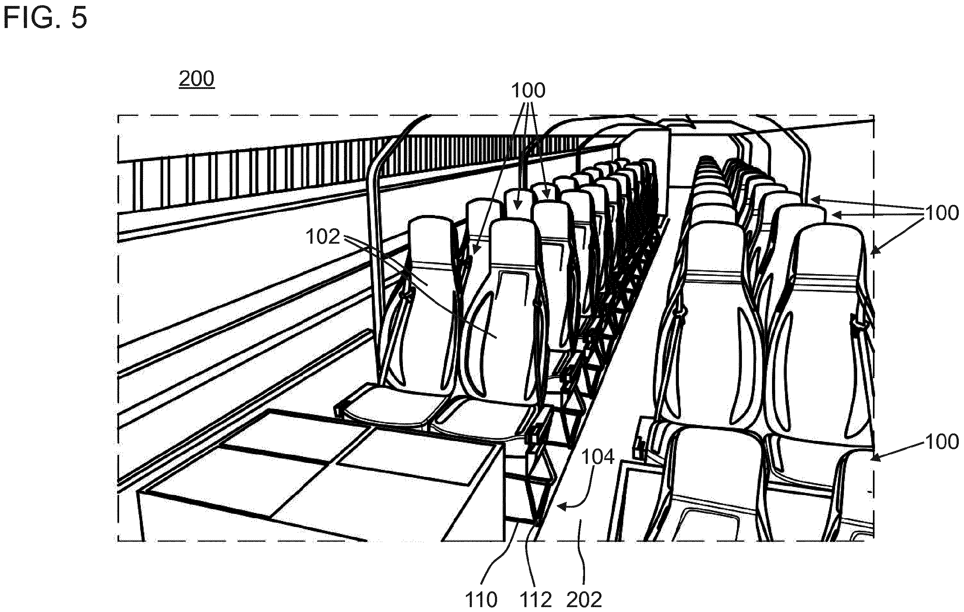

Figur 5 zeigt schematisch eine perspektivische Darstellung einer ersten Anordnung mehrerer Sitzgruppen 100 in einem beispielhaften Fahrgastraum 200. Der Fahrgastraum 200 umfasst linksseitig und rechtsseitig jeweils eine zusammenhängende Nutenführung 204. In der in der Figur 5 gezeigten ersten Anordnung sind die Sitzgruppen 100 zueinander parallel, gleich beabstandet und in Fahrtrichtung ausgerichtet.

Die Nutenführung 204 umfasst auf jeder Fahrzeugseite eine parallel zur Längsrichtung (d.h. parallel zur Fahrtrichtung) sich erstreckende Längsführung und in räumlicher Zuordnung zu jeder der Sitzgruppen 100 jeweils eine mit der Längsführung durchgehend verbundene Querführung.

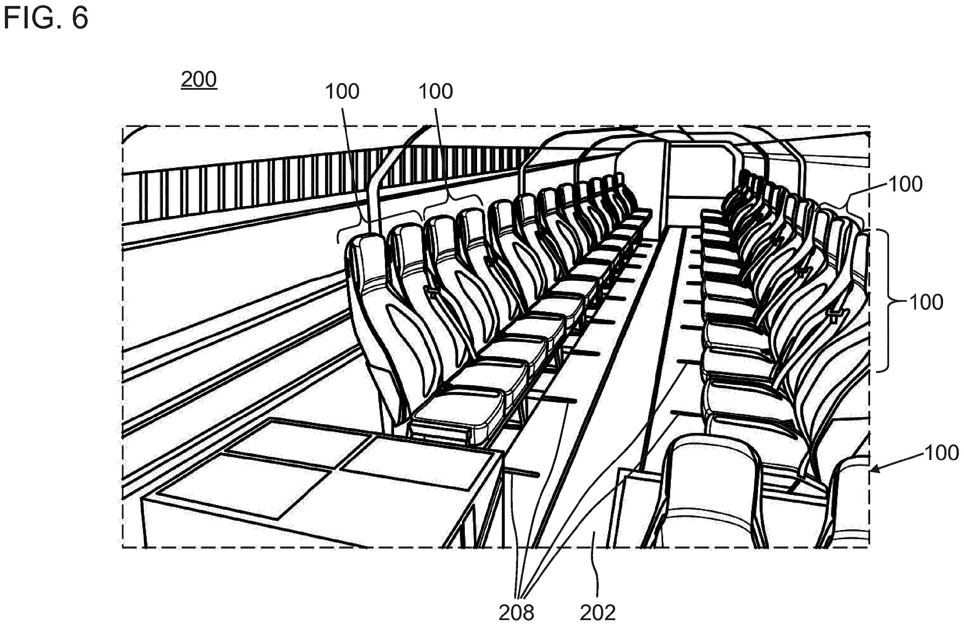

Figur 6 zeigt schematisch eine zweite Anordnung derselben Sitzgruppen 100 im selben beispielhaften Fahrgastraum 200 der Figur 5. Durch Lösen der Verankerungsstelle 106, ohne dass der jeweilige Nutenstein an der Nutenführung 204 außer Eingriff kommt, sind die Sitzgruppen 100 um 90° zur Innenseite des Fahrgastraums 200 drehbar und entlang der jeweils zugeordneten Querführung 208 zur Außenseite des Fahrgastraums verschiebbar. Dadurch ist in der Mitte des Fahrgastraums ein breiter Durchgang zwischen den sich gegenüberstehenden Sitzgruppen 100 gebildet.

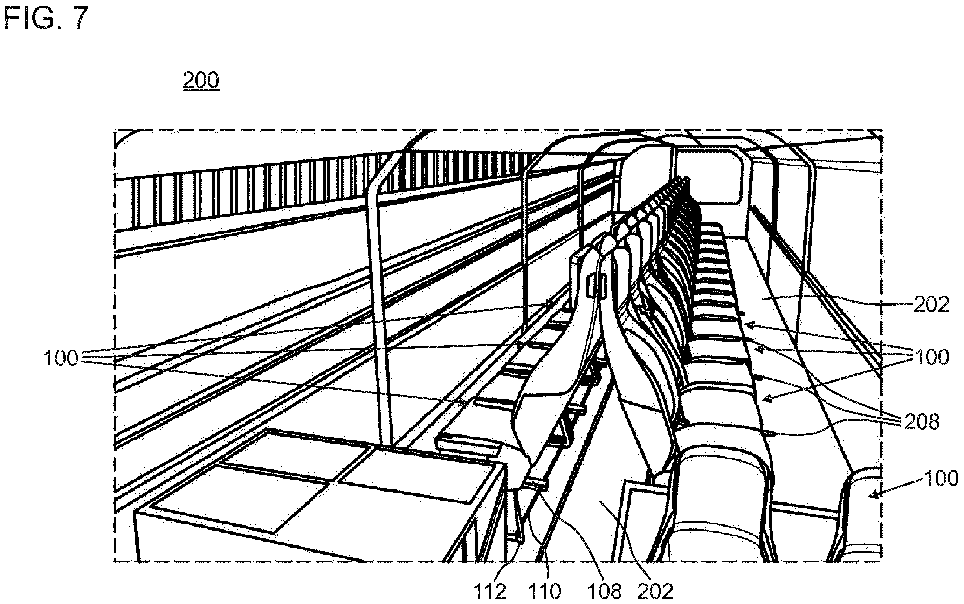

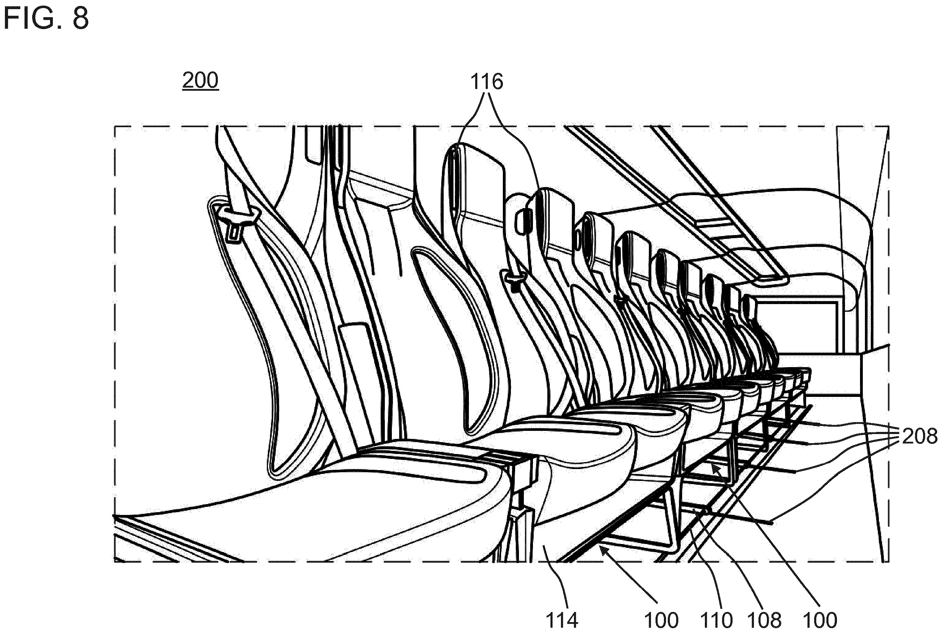

Figur 7 zeigt schematisch eine perspektivische Darstellung einer dritten Anordnung derselben Sitzgruppen 100 im selben beispielhaften Fahrgastraum 200 der Figuren 5 und 6. Die Sitzgruppen 100 sind im gelösten Zustand der jeweiligen Verankerungsstelle 106 um 90° gegenüber der ersten Anordnung bzw. um 180° gegenüber der zweiten Anordnung gedreht. Ausgehend von der zweiten Anordnung der Figur 6 sind die Sitzgruppen ferner zur Mitte des Fahrgastraums hin entlang der jeweiligen Querführung 208 (beispielsweise über die kreuzende Längsführung hinaus) verschoben. So ist an den Fensterseiten des Fahrgastraums 200 jeweils ein Durchgang gebildet. Figur 8 zeigt die dritte Anordnung der Sitzgruppen 100 in einer tieferen Perspektive, in der die einzelnen Ablagen 114 dargestellt sind.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Sitzgruppe
- 102: Sitzplätze
- 104: Unterbau
- 106: Verankerungsstelle
- 108: Querträger
- 110: Längsträger
- 112: Füße des Unterbaus
- 114: Ablage
- 116: Lüftungsöffnungen
- 118: Nutenstein
- 120: Drehachse der Verankerungsstelle
- 200: Fahrgastraum
- 202: Boden des Fahrgastraums
- 204: Nutenführung
- 206: Längsführung der Nutenführung
- 208: Querführung der Nutenführung
- 210: Einführöffnung der Nutenführung

## Patentansprüche

1. Personenbeförderungsfahrzeug, insbesondere Bus, mit einem Fahrgastraum (200), welcher umfasst:
mehrere Sitzgruppen (100), jede Sitzgruppe (100) umfassend:
mindestens zwei Sitzplätze (102); und
einen die mindestens zwei Sitzplätze (102) tragenden Unterbau (104), wobei der Unterbau (104) bodenseitig eine Verankerungsstelle (106) umfasst, die in einem gelösten Zustand in eine Nutenführung (204) einsetzbar ist, und die in einem arretierten Zustand in der Nutenführung (204) lösbar arretiert ist, wobei die Sitzgruppe (100) im gelösten Zustand bezüglich der Nutenführung (204) verschiebbar und drehbar ist, und im arretierten Zustand bezüglich der Nutenführung (204) orts- und drehfest ist;
**gekennzeichnet durch**
die am Boden des Fahrgastraums befestigte Nutenführung (204),
wobei die Sitzgruppen (100) in einer ersten Anordnung durch den arretierten Zustand der Verankerungsstellen (106) orts- und drehfest auf dem Boden des Fahrgastraums (200) angeordnet sind, und wobei die Sitzgruppen (100) im gelösten Zustand der Verankerungsstellen (106) in eine zweite Anordnung längs der Nutenführung (204) verschiebbar und/oder drehbar sind.

2. Personenbeförderungsfahrzeug nach Anspruch 1, wobei im gelösten Zustand die Verankerungsstelle (106) in einer Längsrichtung der Nutenführung (204) beweglich und in einer Ebene senkrecht zur Längsrichtung formschlüssig in der Nutenführung angeordnet oder anordenbar ist.

3. Personenbeförderungsfahrzeug nach Anspruch 1 oder 2, wobei die Verankerungsstelle (106) einen zur Verbindung mit der Nutenführung (204) ausgebildeten Nutenstein (118) umfasst.

4. Personenbeförderungsfahrzeug nach einem der Ansprüche 1 bis 3, wobei die Verankerungsstelle (106) zentral unterhalb der Sitzplätze (102) angeordnet ist.

5. Personenbeförderungsfahrzeug nach Anspruch 3 und 4, wobei die Verankerungsstelle (106) nur einen Nutenstein (118) umfasst, der auf einer Drehachse (120) der Drehbeweglichkeit der Verankerungsstelle (106) im gelösten Zustand angeordnet ist.

6. Personenbeförderungsfahrzeug nach einem der Ansprüche 1 bis 5, wobei die mindestens zwei Sitzplätze (102) der Sitzgruppe (100) aneinander angrenzend und/oder parallel zueinander ausgerichtet sind.

7. Personenbeförderungsfahrzeug nach einem der Ansprüche 1 bis 6, wobei die Sitzgruppe (100) eine oder mehrere Belüftungsöffnungen (116) zum Erzeugen eines Luftstroms aufweist.

8. Personenbeförderungsfahrzeug nach einem der Ansprüche 1 bis 7, wobei die Sitzgruppe (100) eine oder mehrere Gepäckablagen umfasst.

9. Personenbeförderungsfahrzeug nach einem der Ansprüche 1 bis 8, wobei der Unterbau ferner Füße (112) umfasst, wobei die Verankerungsstelle (106) im arretierten Zustand mit der Nutenführung (204) mit einer Zugkraft vorgespannt ist, welche die Füße (112) reibschlüssig auf einen Boden (202) des Fahrgastraums (200) drückt.

10. Personenbeförderungsfahrzeug nach einem der Ansprüche 1 bis 9, wobei die Verankerungsstellen (106) beim Übergang von der ersten Anordnung in die zweite Anordnung mit der Nutenführung (204) in Eingriff bleiben.

11. Personenbeförderungsfahrzeug nach einem der Ansprüche 1 bis 10, wobei die Nutenführung (204) mindestens eine Längsführung (206) und mehrere quer der Längsführung (206) abzweigende Querführungen (208) umfasst.

12. Personenbeförderungsfahrzeug nach einem der Ansprüche 1 bis 11, wobei jede Sitzgruppe (100) einer der Querführungen (208) zugeordnet ist, bei der ersten Anordnung die Verankerungsstelle jeder Sitzgruppe (100) in der zugeordneten Querführung (208) arretiert ist, und bei der zweiten Anordnung die Verankerungsstelle jeder Sitzgruppe (100) in der Längsführung (206) arretiert ist.

13. Personenbeförderungsfahrzeug nach einem der Ansprüche 1 bis 12, wobei die Nutenführung an mindestens einem Ende der Nutenführung jeweils eine Einführöffnung (210) aufweist.

## Claims

1. A passenger-transporting vehicle, in particular a bus, having a passenger compartment (200), comprising:
a plurality of seating groups (100), each seating group (100) comprising:
at least two seats (102); and
a substructure (104), which supports the at least two seats (102), wherein, on the floor side, the substructure (104) comprises an anchoring point (106) which, in a released state, can be inserted into a grooved guide means (204) and, in an arrested state, is arrested in a releasable manner in the grooved guide means (204), wherein, in the released state, the seating group (100) can be displaced and rotated in relation to the grooved guide means (204) and, in the arrested state, it is fixed in terms of positioning and rotation in relation to the grooved guide means (204);
**characterized by**
the grooved guide means (204), which is fastened on the floor of the passenger compartment, wherein, in a first arrangement, the seating groups (100) are arranged in a positionally and rotationally fixed manner on the floor of the passenger compartment (200) as a result of the arrested state of the anchoring points (106), and wherein, in the released state of the anchoring points (106), the seating groups (100) can be displaced and/or rotated along the grooved guide means (204) into a second arrangement.

2. The passenger-transporting vehicle according to Claim 1, wherein, in the released state, the anchoring point (106) is, or can be, arranged in a movable manner in a longitudinal direction of the grooved guide means (204) and, in a plane perpendicular to the longitudinal direction, in a form-fitting manner in the groove guide means.

3. The passenger-transporting vehicle according to Claim 1 or 2, wherein the anchoring point (106) comprises a sliding block (118), which is designed for connection to the grooved guide means (204).

4. The passenger-transporting vehicle according to one of Claims 1 to 3, wherein the anchoring point (106) is arranged centrally beneath the seats (102).

5. The passenger-transporting vehicle according to Claims 3 and 4, wherein the anchoring point (106) comprises just one sliding block (118), which is arranged on an axis of rotation (120) of the rotational means of the anchoring point (106) in the released state.

6. The passenger-transporting vehicle according to one of Claims 1 to 5, wherein the at least two seats (102) of the seating group (100) are adjacent to one another and/or oriented parallel to one another.

7. The passenger-transporting vehicle according to one of Claims 1 to 6, wherein the seating group (100) has one or more ventilation openings (116) for generating an air stream.

8. The passenger-transporting vehicle according to one of Claims 1 to 7, wherein the seating group (100) comprises one or more luggage racks.

9. The passenger-transporting vehicle according to one of Claims 1 to 8, wherein the substructure also comprises feet (112), wherein, in the state in which it is arrested with the grooved guide (204), the anchoring point (106) is prestressed by a tensile force which pushes the feet (112) in a frictionally locking manner onto a floor (202) of the passenger compartment (200).

10. The passenger-transporting vehicle according to one of Claims 1 to 9, wherein the anchoring points (106) remain in engagement with the grooved guide means (204) during transfer from the first arrangement into the second arrangement.

11. The passenger-transporting vehicle according to one of Claims 1 to 10, wherein the grooved guide means (204) comprises at least one longitudinal guide (206) and a plurality of transverse guides (208), which branch off transversely from the longitudinal guide (206).

12. The passenger-transporting vehicle according to one of Claims 1 to 11, wherein each seating group (100) is assigned to one of the transverse guides (208), the anchoring point of each seating group (100) is arrested in the associated transverse guide (208) in the case of the first arrangement, and the anchoring point of each seating group (100) is arrested in the longitudinal guide (206) in the case of the second arrangement.

13. The passenger-transporting vehicle according to one of Claims 1 to 12, wherein the grooved guide means has a respective introduction opening (210) at at least one end of the grooved guide means.

## Revendications

1. Véhicule de transport de personnes, notamment un autobus, qui est pourvu d'un habitacle (200) qui comprend :
une pluralité de groupes de sièges (100), chaque groupe de sièges (100) comprenant :
au moins deux assises (102) ; et
une infrastructure (104) portant les au moins deux assises (102), l'infrastructure (104) comprenant du côté plancher un point d'ancrage (106) qui, dans un état libéré, peut être inséré dans une rainure de guidage (204) et qui, dans un état bloqué, est bloqué de manière libérable dans la rainure de guidage (204), le groupe de sièges (100) étant déplaçable en translation et en rotation par rapport à la rainure de guidage (204) dans l'état libéré et étant immobile en translation et en rotation par rapport à la rainure de guidage (204) dans l'état bloqué ;
**caractérisé par**
la rainure de guidage (204), fixée au plancher de l'habitacle,
les groupes de sièges (100) étant disposés de manière fixe en translation et en rotation sur le plancher de l'habitacle (200) suivant un premier agencement lorsque les points d'ancrage (106) sont bloqués et les groupes de sièges (100) pouvant être déplacés en translation et/ou en rotation le long de la rainure de guidage (204) suivant un deuxième agencement lorsque les points d'ancrage (106) sont libérés.

2. Véhicule de transport de personnes selon la revendication 1, le point d'ancrage (106) étant mobile à l'état libéré dans une direction longitudinale de la rainure de guidage (204) et étant disposé ou pouvant être disposé par complémentarité de formes dans la rainure de guidage dans un plan perpendiculaire à la direction longitudinale.

3. Véhicule de transport de personnes selon la revendication 1 ou 2, le point d'ancrage (106) comprenant un coulisseau (118) conçu pour être relié à la rainure de guidage (204).

4. Véhicule de transport de personnes selon l'une des revendications 1 à 3, le point d'ancrage (106) étant disposé au centre au-dessous des assises (102).

5. Véhicule de transport de personnes selon les revendications 3 et 4, le point d'ancrage (106) comprenant un seul coulisseau (118) qui est disposé sur un axe de rotation (120) de la mobilité en rotation du point d'ancrage (106) à l'état libéré.

6. Véhicule de transport de personnes selon l'une des revendications 1 à 5, les au moins deux assises (102) du groupe de sièges (100) étant alignées les unes à côté des autres et/ou parallèlement les unes aux autres.

7. Véhicule de transport de personnes selon l'une des revendications 1 à 6, le groupe de sièges (100) comportant une ou plusieurs ouvertures de ventilation (116) destinées à générer un flux d'air.

8. Véhicule de transport de personnes selon l'une des revendications 1 à 7, le groupe de sièges (100) comprenant un ou plusieurs rangements de bagages.

9. Véhicule de transport de personnes selon l'une des revendications 1 à 8, l'infrastructure comprenant en outre des pieds (112), le point d'ancrage (106), à l'état verrouillé à la rainure de guidage (204), étant précontraint avec une force de traction qui presse les pieds (112) par friction sur un plancher (202) de l'habitacle (200).

10. Véhicule de transport de personnes selon l'une des revendications 1 à 9, les points d'ancrage (106) restant en engagement avec la rainure de guidage (204) lors du passage du premier agencement au deuxième agencement.

11. Véhicule de transport de personnes selon l'une des revendications 1 à 10, la rainure de guidage (204) comprenant au moins un guide longitudinal (206) et une pluralité de guides transversaux (208) bifurquant transversalement du guide longitudinal (206).

12. Véhicule de transport de personnes selon l'une des revendications 1 à 11, chaque groupe de sièges (100) étant associé à l'un des guides transversaux (208), dans le premier agencement le point d'ancrage de chaque groupe de sièges (100) étant bloqué dans le guide transversal associé (208) et dans le deuxième agencement le point d'ancrage de chaque groupe de sièges (100) étant bloqué dans le guide longitudinal (206).

13. Véhicule de transport de personnes selon l'une des revendications 1 à 12, la rainure de guidage comportant une ouverture d'insertion (210) à l'au moins une extrémité de la rainure de guidage.
